**Europäisches Patentamt**

**European Patent Office**

**Office européen des brevets**

(11) Veröffentlichungsnummer: **0 128 369**
**A1**

## (12) EUROPÄISCHE PATENTANMELDUNG

(21) Anmeldenummer: 84105320.0

(22) Anmeldetag: 25.11.80

(51) Int. Cl.³: **G 02 B 5/136**

(30) Priorität: 27.11.79 DE 2947719
27.03.80 DE 3011955

(43) Veröffentlichungstag der Anmeldung: 19.12.84
Patentblatt 84/51

(84) Benannte Vertragsstaaten: **AT BE CH DE FR GB IT LI LU NL SE**

(60) Veröffentlichungsnummer der früheren Anmeldung nach Art. 76 EPÜ: 0029611

(71) Anmelder: **D. Swarovski & Co., Postfach 15, A-6112 Wattens (AT)**

(72) Erfinder: **Schwab, Kurt, Dr., Heiderichweg 5, A-6060 Mils (AT)**

(74) Vertreter: **Kador . Klunker . Schmitt-Nilson . Hirsch, Corneliusstrasse 15, D-8000 München 5 (DE)**

(54) **Retroreflektorplatte.**

(57) Retroreflektorplatte mit grossem Reflexionswinkelbereich und hohem Lichtwert, wobei bei senkrechter Parallelprojektion der Leichteintrittsflächen (4) bzw. Reflexionsflächen (5) auf die Plattenfläche als Grundrißebene die Grundrisse jeweils zugehöriger Leichteintrittsflächen (4) und Reflexionsflächen (5) im wesentlichen gleichen Flächeninhalt aber verschiedene Umrißformen haben.

EP 0 128 369 A1

- 1 -

Die Erfindung bezieht sich auf eine Retroreflektorplatte.

Es sind Retroreflektorplatten bekannt, bei denen eine Vielzahl von Kugelrückstrahlelementen aus Glas in eine Kunststoffplatte eingesetzt und zusammengefaßt sind. Nachteilig bei diesen bekannten Retroreflektorplatten ist zum einen, daß deren Herstellung aus vielen einzelnen Kugelrückstrahlelementen und deren Einsetzen in eine Kunststoffplatte aufwendig ist.

Bedeutend schwerwiegender ist jedoch der geringe Lichtwert der bekannten Retroreflektorplatten. Retroreflektoren, die im Straßenverkehr eingesetzt werden, müssen auch schräg einfallende Lichtstrahlen, insbesondere innerhalb den von den Behörden vorgeschriebenen Winkelbereichen, retroreflektieren können. Dies ist bei den bekannten Reflektoren nur dadurch zu erreichen, daß der Durchmesser der Reflexionsfläche des einzelnen Kugelrückstrahlelementes größer gewählt wird als jener der Lichteintrittsfläche. Dies führt dazu, daß die einzelnen Elemente bezüglich der Lichteintrittsseite nicht lückenlos aneinandergesetzt werden können. Zum anderen kommt dazu, daß zwischen den einzelnen Reflektoren auch auf der Reflektorseite Kunststoffstege vorgesehen sein müssen, damit die erforderliche Einbettung der Elemente in der Kunststoffplatte gewährleistet ist. Dadurch tritt eine weitere erhebliche Verringerung der

- 2 -

optisch wirksamen Fläche auf. Bei den in der Praxis bekannten Retroreflektorplatten wird aus den vorgenannten Gründen nur lediglich etwa ein Drittel der Gesamtfläche optisch genutzt bzw. ist optisch wirksam. Ein lückenloses Aneinanderfügen der einzelnen Kugelrückstrahlelemente würde andererseits dazu führen, daß die Konfiguration der einzelnen Reflexionsflächen jener der Lichteintrittsflächen entsprechen müßte, so daß die geforderten Winkelwerte nicht erreicht werden könnten.

Aus der DE-OS 16 22 012 ist ein Reflektor bekannt geworden, der weder auf der Vorderseite noch auf der Rückseite eine volle Auslegung mit Lichteintritts- bzw. Reflexionsflächen aufweist, vielmehr liegen zwischen den Flächen optisch inaktive Bereiche. Dadurch ergibt sich zwangläufig ein verringerter Lichtwert. Hinzu kommt, daß die Lichteintrittsflächen gleiche Ausgestaltung wie die Reflexionsflächen aufweisen. Schräg einfallende Lichtstrahlen, die nicht mehr auf die Reflexionsfläche treffen, können nicht mehr reflektiert werden. Mit einer solchen Ausgestaltung kann somit keine Reflexion in einem Weitwinkelbereich erzielt werden.

Der in der AT -PS 332 763 beschriebene Reflektor zeigt zwar eine volle Flächenauslegung, ist jedoch bezüglich der Winkelwerte gleichermaßen nicht zufriedenstellend, da bei diesem Reflektor genauso wenig schräg einfallende Lichtstrahlen retro-

- 3 -

reflektiert werden.

Der in der DE-OS 19 32 259 beschriebene Reflektor ist bezüglich des Reflexionswinkelbereichs besser, da die Reflexionsflächen größer ausgestaltet sind als die Lichteintrittsflächen. Mit solchen Reflektorelementen ist jedoch eine volle Auslegung der Lichteintrittsseite nicht möglich, wenn die Reflexionsflächen voll ausgebildet sein sollen, so daß dann optisch nicht wirksame Bereiche auf der Lichteintrittsseite vorliegen, die zu einem verringerten Lichtwert führen.

In der US-PS 22 43 434 sind verschiedene Ausge- staltungen von Lichteintrittsflächen und Reflexions- flächen beschrieben. Auch bei diesen Reflektoren ist weder eine volle Flächenauslegung gegeben noch kann Reflexion in weiten Winkelbereichen erzielt werden.

Bei den bekannten Reflektoren gelang es bisher nicht, das Erfordernis weiter Winkelbereiche mit dem Erfordernis eines hohen Lichtwertes zu vereinen. Entweder erfolgt bei den bekannten Reflektoren keine Retroreflexion schräg einfallender Lichtstrahlen, was jedoch für viele Anwendungszwecke erforderlich ist, oder es sind keine hohen Lichtwerte gewährleistet,weil keine volle optisch wirksame Belegung der Lichteintrittsfläche vorliegt.

Der Erfindung liegt die Aufgabe zugrunde, eine Retroreflektorplatte zu schaffen, die höchste Lichtwerte aufweist und bei der Retroreflexion in einem großen Reflexionswinkelbereich erzielt wird.

Diese Aufgabe wird erfindungsgemäß durch eine Retroreflektorplatte gelöst, die aus einer durchsichtigen Platte mit einer reflektierenden Rückseite besteht, deren Vorderseite nebeneinander angeordnete, gekrümmte Lichteintrittsflächen und deren Rückseite nebeneinander angeordnete, gekrümmte Reflexionsflächen aufweist, wobei die optische Achse jeder einzelnen Lichteintrittsfläche mit der optischen Achse einer jeweils zugehörigen Reflexionsfläche zusammenfällt, die dadurch gekennzeichnet ist, daß bei senkrechter Parallelprojektion der Lichteintrittsflächen bzw. Reflexionsflächen auf die Plattenfläche als Grundrißebene die Grundrisse jeweils zugehöriger Lichteintrittsflächen und Reflexionsflächen im wesentlichen gleichen Flächeninhalt aber verschiedene Umrißform haben.

Um höchste Lichtwerte zu erreichen, soll die Vorderseite von den Lichteintrittsflächen und die Rückseite von den Reflexionsflächen im wesentlichen voll ausgelegt sein.

Die Lichteintrittsflächen weisen vorzugsweise eine sechseckige Umrißform auf.

Flächeninhalt und Umrißform der Lichteintrittsflächen bzw. Reflexionsflächen sind hier auf die Grundrisse bezogen, die sich bei senkrechter Parallelprojektion der Lichteintrittsflächen bzw. Reflexionsflächen auf die Plattenfläche als Grundrißebene ergeben.

- 6 -

Die Lichteintrittsflächen und die Reflexionsflächen
können gleiche Umrißform, beispielsweise die Form
von Sechsecken aufweisen. Es kommt jedoch auch eine
unterschiedliche Umrißform in Betracht.

Die Lichteintrittsflächen
haben    vorzugsweise eine sechseckige, quadratische oder
rechteckige Umrißform und die Reflexionsflächen eine
rechteckige Umrißform.

Die Reflexionsseite der Platte weist vorzugsweise eine
volle Flächenauslegung mit einzelnen nebeneinanderliegenden Reflexionsflächen auf. Der Flächeninhalt
der Reflexionsflächen ist gleich jenem der Lichteintrittsflächen, jedoch weisen die beiden Flächen unterschiedliche Umrißform auf.

Durch Änderung der Umrißform der Reflexionsflächen im
Vergleich zu den Lichteintrittsflächen können die Reflexionsbereiche in einfacher Weise variiert werden,
und der Reflektor kann somit geforderten oder gewünschten
Bedingungen leicht angepaßt werden. Dieses optische
System erlaubt eine weitestgehende Variation der Reflexionsbereiche bei Beibehaltung hoher Lichtwerte und
läßt sich dadurch bestehenden Gegebenheiten und Spezifikationen anpassen.

Die Lichteintrittsseite ist      vorzugsweise mit einzelnen, nebeneinander

angeordneten, gekrümmten Lichteintrittsflächen voll ausgelegt ist. Dadurch ist sichergestellt, daß das gesamte auf den Reflektor fallende Licht retroreflektiert werden kann, was nicht der Fall wäre, wenn zwischen den einzelnen Lichteintrittsflächen tote, d.h. optisch inaktive Bereiche vorliegen würden. Eine volle Flächenauslegung ist insbesondere mit Quadraten, Rechtecken, Parallelogrammen und Sechsecken möglich.

Jeder Lichteintrittsfläche ist eine Reflexionsfläche zugeordnet, wobei die optischen Achsen korrespondierender Flächen zusammenfallen.

Im Normalfall liegen die optischen Achsen senkrecht zur Reflektorplatte. Für bestimmte Anwendungen, beispielsweise Bodenmarkierungen, kann es vorteilhaft sein,

- 8 -

die optischen Achsen in einem Winkel zur Senkrechten auf der Retroreflektorplatte anzuordnen, um dadurch eine andersartige Reflexionscharakteristik zu erreichen.

Auch die Reflexionsseite der Platte weist vorzugsweise eine volle Flächenauslegung mit einzelnen, nebeneinanderliegenden Reflexionsflächen auf.

In vielen Fällen, beispielsweise bei Retroreflektoren, die im Straßenverkehr eingesetzt werden, wird eine optische Wirksamkeit in vorgegebenen Winkelbereichen verlangt. Beispielsweise muß der Winkelbereich bezüglich der Horizontalebene sehr groß, kann jedoch in der Vertikalebene verhältnismäßig klein sein. Mit den erfindungsgemäßen Retroreflektorplatten können solche Forderungen auf beste und einfachste Weise erfüllt werden. Die Winkelbereiche, innerhalb derer der Reflektor optisch wirksam ist, sind in etwa proportional den Abmessungen der Reflexionsflächen. Durch die Änderung der Umrißform der Flächen, indem beispielsweise die Reflexionsflächen in Form langgezogener Sechsecke vorgesehen werden, bzw. des Flächeninhaltes der Reflexionsflächen ist es daher möglich, Vorzugsbereiche zu schaffen, und beispielsweise eine optische Wirksamkeit in Horizontalebene in bedeutend vergrößerten Winkelbereichen zu gewährleisten. Diese Anpassung an geforderte oder gewünschte Winkelbereiche ist erfindungsgemäß möglich, wobei gleichzeitig eine volle Flächenauslegung sowohl der Eintrittsseite als auch der Reflexionsseite erhalten bleiben.

Um bestimmte Vorzugsbereiche für die Retroreflexion zu schaffen kommt es ferner in Betracht, auch die Flächengeometrie der Lichteintrittsflächen besonders zu gestalten, beispielsweise in Form langgezogener Sechsecke,oder auch den Raster,in dem die Elemente angeordnet sind, zu ändern. Bei solchen Ausgestaltungsformen können bei beidseitig voller Flächenauslegung extremste Winkelbereiche genutzt werden.

Die erfindungsgemäßen Retroreflektorplatten zeichnen sich durch eine optimale Reflexionscharakteristik aus, weil durch Änderung der Flächengeometrie sowohl der Lichteintrittsflächen als auch der Reflexionsflächen relativ zueinander sowie der Rasteranordnung die Reflexionsbereiche in einfacher Weise variiert werden können und der Reflektor somit den geforderten oder gewünschten Bedingungen optimal angepaßt werden kann. Dieses optische System erlaubt eine weitestgehende Variation der Reflexionsbereiche bei Beibehaltung höchster Lichtwerte.

Die Herstellung der Retroreflektorplatte ist äußerst einfach und wirtschaftlich.

Aus fertigungstechnischen Gründen kann es vorteilhaft sein, die Ecken der gekrümmten Reflexionsflächen abzurunden, bzw. abzuflachen, wodurch das Einfallsverhalten lediglich in Extrembereichen beeinflußt wird. Die Vorteile hinsichtlich der Fertigung können jedoch diese unerhebliche Beeinträchtigung in der Optik rechtfertigen.

0029611
0128369

Die Retroreflektorplatten können in verschiedensten Bereichen Verwendung finden und eignen sich aufgrund ihrer Optik sowie ihrer Unempfindlichkeit im Hinblick auf Witterungseinflüsse insbesondere für den Strassenverkehr.

Die Erfindung wird nachstehend anhand der Zeichnung, die beispielshafte Ausgestaltungen zeigt, näher erläutert.

Es zeigen:

Fig. 1        eine Draufsicht auf eine Retroreflektorplatte von der Lichteintrittsseite, wobei
              teilweise die nicht sichtbaren Reflexionsflächen eingezeichnet sind,

Fig. 2        eine Draufsicht auf die Retroreflektorplatte von der Reflexionsseite,

Fig. 3        einen Querschnitt längs der Linie A-A

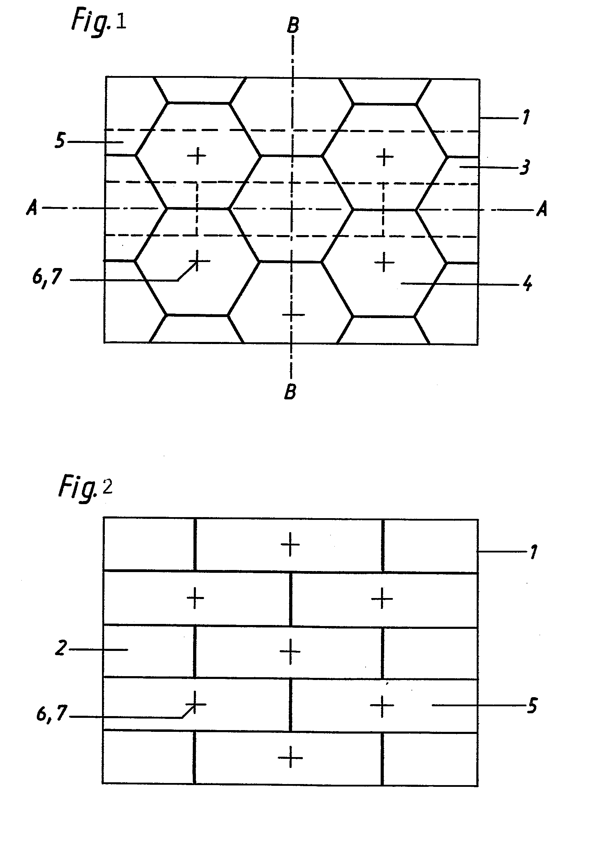

              in Fig. 1,

Fig. 4        einen Querschnitt längs der Linie B-B
              in Fig. 1 und

Fig. 5, 6, 7  die Umrißformen von übereinander gezeich-
              neten Lichteintrittsflächen und Reflexions-
              flächen gemäß verschiedener Ausführungs-
              formen.

Die in Fig. 1 gezeigte Retroreflektorplatte 1 trägt auf ihrer Vorderseite 3 Lichteintrittsflächen 4 in Form von regelmäßigen Sechsecken.

Jeder Lichteintrittsfläche 4 ist eine Reflexionsfläche 5 zugeordnet, wobei die jeweiligen optischen Achsen 6,7 zusammenfallen.

Die rechteckigen Reflexionsflächen 5 entsprechen in ihrem Flächeninhalt den sechseckigen Lichteintrittsflächen 4, wobei die Schmalseite des Rechtecks eine Länge entsprechend dem halben Abstand zweier paralleler Sechsecksseiten aufweist, während die Längsseite des Rechtecks der Summe aus Sechsecksdurchmesser plus Sechseckskantenlänge entspricht.

Die optische Wirksamkeit wird von den Abmessungen der Reflexionsflächen bestimmt. Die Winkelbereiche innerhalb derer Reflexion erfolgt, sind den Rechteckslängen proportional.

In Fig. 2 ist die Rückseite 2 der Retroreflektorplatte 1 mit den rechteckigen Reflexionsflächen 5 gezeigt.

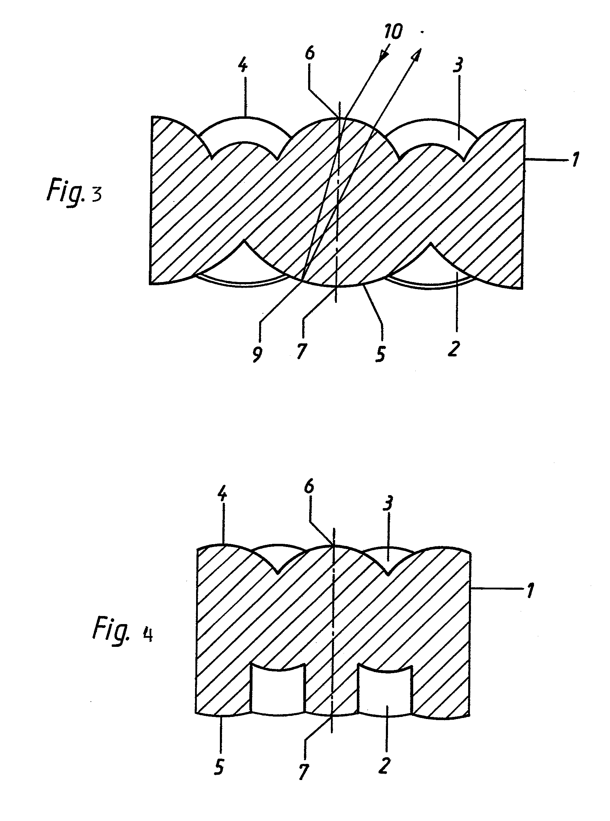

Fig. 3 zeigt einen Querschnitt längs der Linie A-A der Fig. 1. Auf der Vorderseite 3 der Retroreflektorplatte 1 sind die Lichteintrittsflächen 4 und auf der Rückseite 2 die Reflexionsflächen 5 gezeigt. Die optische Achse 6 der Lichteintrittsflächen korrespondiert mit

- 13 -

der optischen Achse 7 der Reflexionsflächen. Der einfallende Lichtstrahl 10 wird von der reflektierenden
Schicht 9 parallel reflektiert. Die Abschnitte zwischen
den Lichteintrittsflächen 4 ergeben sich aus der
Führung des Schnittes durch die Berührungslinie zwischen
zwei Sechsecken bei jeder zweiten Sechsecksreihe.

Fig. 4 zeigt einen Schnitt längs der Linie B-B der
Fig. 1. Ein Vergleich zwischen Fig. 3 und 4 zeigt
deutlich die unterschiedliche Ausbildung der sechseckigen Lichteintrittsflächen 4 und der rechteckigen
Reflexionsflächen 5.

Fig. 5 zeigt ein weiteres Beispiel, wobei die Lichteintrittsflächen 4 die Form regelmäßiger Sechsecke haben,
während die Reflexionsflächen 5 die Umrißform von unregelmäßigen Sechsecken mit seitlich angesetzten Rechtecken aufweisen.

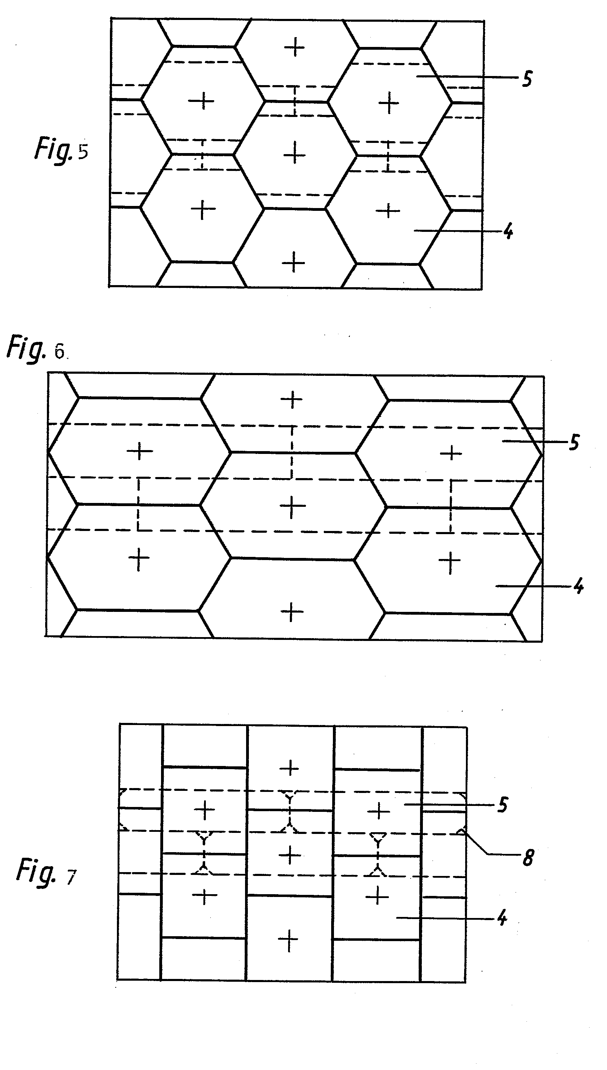

In Fig. 6 ist ein Beispiel gezeigt, bei dem die Lichteintrittsflächen 4 langgestreckte Sechsecke sind und
die Reflexionsflächen 5 sehr langgezogene Rechtecke
darstellen. Bei solchen oder ähnlichen Ausführungsformen,
bei denen die Lichteintrittsflächen in einer Richtung
gestreckt sind, können bei beidseitig voller Flächenauslegung extremste Winkelbereiche genutzt werden.

Fig. 7 zeigt quadratische Lichteintrittsflächen 4 und
rechteckige Reflexionsflächen 5. Es ist ersichtlich,
daß bei der Ausbildung der Lichteintrittsflächen in
Form von Quadraten oder Rechtecken die Abmessungen.

der rechteckigen Reflexionsflächen in weiten Grenzen variiert werden können. Bei der Ausgestaltung der Lichteintrittsflächen in Form von Rechtecken oder Quadraten ist es erforderlich, jede zweite Reihe der Quadrate oder Rechtecke versetzt anzuordnen, und zwar dürfen die Mittelpunkte der Lichteintrittsflächen in jener Richtung, in der die Längsseite des Rechtecks der Reflexionsflächen liegt, nicht auf einer Linie liegen.

In Fig. 7 ist auch angedeutet, daß die Ecken 8 der rechteckigen Reflexionsflächen 5 abgerundet oder abgeschnitten sein können.

Die Optik von Rückstrahlelementen, auf der die Optik der erfindungsgemäßen Retroreflektorplatte basiert, ist bekannt,so daß darauf nicht näher eingegangen werden muß. Beispielsweise ist diese Optik in den vorgenannten Patentschriften beschrieben.

Die Lichteintrittsflächen können sphärisch oder asphärisch gekrümmt sein. Die Reflexionsflächen weisen üblicherweise ebenfalls sphärische Krümmung auf. Die Krümmung der Lichteintrittsflächen ist abhängig vom Brechungsindex des verwendeten Materials und von der gewünschten Streuung des reflektierenden Lichtes.

Für große Einfallswinkel, beispielsweise größer als 25°, kann die Ausbildung der Reflexionsflächen als rotationssymmetrischer Stufenspiegel vorteilhaft sein.

- 15 -

Diese Stufe läßt sich jedoch gewünschtenfalls vermeiden, indem die zugehörigen Lichteintrittsflächen
mit kleinerem Krümmungsradius ausgebildet werden.

Es ist auch möglich, den Krümmungsradius der Lichteintrittsflächen unverändert zu lassen aber die zugehörigen Lichteintrittsflächen vorstehen zu lassen.
Die Scheitel der Lichteintrittsflächen sind dann
nicht mehr in der gleichen Ebene.

Durch die erwähnte Änderung der Krümmungsradien jeder zweiten Lichteintrittsfläche ist das Schnittbild
der Lichteintrittsflächen nicht mehr gleich, es liegen
vielmehr unterschiedlich ausgestaltete Lichteintrittsflächen vor.

Als durchsichtiges Material für die Retroreflektorplatte eignen sich insbesondere Kunststoffe wie Polymethylmethacrylat, Acrylgläser, Celluloseester, wie
Celluloseacetat und Celluloseacetobytyrat, und Polystyrol. Es kommt ferner in Betracht, die Retroreflektorplatte aus einer Kunststoffolie auszubilden. Der
Ausdruck "Platte" soll demgemäß hier auch Folien umfassen.

Die Dicke der Platte hängt im wesentlichen von der gewählten Teilung der Krümmung der optischen Flächen
ab. Vorzugsweise liegt die Plattendicke im Bereich
von 2 bis 10 mm. Aus Kostengründen wird man die Platten
möglichst dünn ausführen,

Die Unterteilung der Lichteintrittsseite des Reflektors
in einzelne Lichteintrittsflächen kann in weiten
Grenzen und in Abhängigkeit vom Brechungsindex des verwendeten Materials, der Plattendicke und der gewünschten
Optik variiert werden.

Die gewählte Teilung bestimmt weitgehend die Höhe
der gekrümmten Lichteintrittsflächen. Letztere liegt
vorzugsweise im Bereich zwischen 0,5 und 2 mm.

Die reflektierende Schicht 9 kann aus jedem geeigneten
reflektierenden Material, insbesondere aufgebrachtem
Silber oder Aluminium, bestehen. Es wird jedoch bevorzugt, die Reflexionsschicht in Form einer Aluminiumfolie vorzusehen.

Ein bevorzugtes Verfahren zur Herstellung der Retroreflektorplatten besteht darin, daß in ein Formwerkzeug, beispielsweise ein Spritzgußwerkzeug, eine Metallfolie, beispielsweise eine Aluminiumfolie, die ggf. mit transparentem Kunststoff beschichtet sein kann, eingelegt wird. Anschließend wird der Kunststoff zur Herstellung der Platte in das Formwerkzeug eingebracht. Bei erhöhter Temperatur erfolgt nun gleichzeitig die Ausformung der Kunststoffplatte einschließlich der Metallfolie und die Verbindung des eingebrachten Kunststoffes mit der Metallfolie.

Gemäß einem alternativen bevorzugten Verfahren können die Retroreflektorplatten, ausgehend von einem Kunststoffband mit eingelegter oder damit verbundener Metallfolie hergestellt werden. Dieses Band wird durch Wärmezufuhr verformbar gemacht und in einem geeigneten Formwerkzeug durch Prägen ausgeformt.

Ein weiteres Verfahren besteht darin, aus transparentem Kunststoff mittels Spritzguß die Platten auszuformen und anschließend mit einer reflektierenden Schicht, beispielsweise durch Aufbringen von Aluminium im Hochvakuum, zu versehen.

D. Swarovski & Co.
Postfach 15
A-6112 Wattens

RETROREFLEKTORPLATTE

P a t e n t a n s p r ü c h e

1. Retroreflektorplatte bestehend aus einer durchsichtigen Platte mit einer reflektierenden Rückseite, deren Vorderseite nebeneinander angeordnete, gekrümmte Lichteintrittsflächen und deren Rückseite nebeneinander angeordnete, gekrümmte Reflexionsflächen aufweist, wobei die optische Achse jeder einzelnen Lichteintrittsfläche mit der optischen Achse einer jeweils zugehörigen Reflexionsfläche zusammenfällt, dadurch g e k e n n z e i c h n e t , daß bei senkrechter Parallelprojektion der Lichteintrittsflächen (4) bzw. Reflexionsflächen (5) auf die Plattenfläche als Grundrißebene die Grundrisse jeweils zugehöriger Lichteintrittsflächen (4) und Reflexionsflächen (5) im wesentlichen gleichen Flächeninhalt aber verschiedene Umrißform haben.

2. Retroreflektorplatte nach Anspruch 1, dadurch g e k e n n z e i c h n e t, daß die Vorderseite (3) von den Lichteintrittsflächen (4) im wesentlichen voll ausgelegt ist.

3. Retroreflektorplatte nach Anspruch 1 oder 2, dadurch g e k e n n z e i c h n e t, daß die Rückseite (2) von den Reflexionsflächen (5) im wesentlichen voll ausgelegt ist.

4. Retroreflektorplatte nach einem der Ansprüche 1 bis 3, dadurch g e k e n n z e i c h n e t, daß sie unterschiedlich ausgestaltete Lichteintrittsflächen ~~(4a, 4b)~~ mit unterschiedlichem Krümmungsradius aufweist.

5. Retroreflektorplatte nach Anspruch 4, dadurch g e k e n n z e i c h n e t, daß sie zwei unterschiedlich ausgestaltete Lichteintrittsflächen aufweist.

6. Retroreflektorplatte nach einem der Ansprüche 1 bis 5, dadurch g e k e n n z e i c h n e t, daß die Grundrisse der Lichteintrittsflächen (4) eine sechseckige, quadratische oder rechteckige Umrißform aufweisen.

7. Retroreflektorplatte nach einem der Ansprüche 1 bis 6, dadurch g e k e n n z e i c h n e t, daß die Grundrisse der Reflexionsflächen (5) eine rechteckige Umrißform aufweisen.

8. Retroreflektorplatte nach einem der Ansprüche 1 bis 7, dadurch g e k e n n z e i c h n e t, daß die Ecken (8) der Umrißformen der Reflexionsflächen (5) abgerundet sind.

9. Retroreflektorplatte nach einem der Ansprüche 1 bis 8, dadurch g e k e n n z e i c h n e t, daß die optischen Achsen (7) in einem Winkel zur Senkrechten auf die Retroreflektorplatte (1) angeordnet sind.

10. Retroreflektorplatte nach einem der Ansprüche 1 bis 9, dadurch g e k e n n z e i c h n e t, daß sie aus einer durchsichtigen Kunststoffplatte oder Kunststoff-folie besteht.

0128369

-1/3-

Fig. 1

Fig. 2

Fig. 3

Fig. 4

Fig. 5

Fig. 6.

Fig. 7

**Europäisches Patentamt**

**EUROPÄISCHER RECHERCHENBERICHT**

0128369

Nummer der Anmeldung

EP 84 10 5320

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-1 930 969 (A. GARBARINI) * Seite 2, Zeilen 120-147; Figuren 16,17 * | 1-3,11 | G 02 B 5/136 |
| A | * Seite 2, Zeilen 73-132; Figuren 4-15,18 * | 7 | |
| Y,D | DE-A-1 932 259 (K.K.R.) * Seiten 7,9; Ansprüche; Figuren 3,4 * | 1-3,10 | |
| Y,D | US-A-3 963 309 (K. SCHWAB) * Spalten 4-5; Figuren 1,2,5 * | 1,10 | |
| A | FR-A- 860 459 (CATAPHOTES & SOLECLAIR) * Zusammenfassung; Figuren * | 1,4 | RECHERCHIERTE SACHGEBIETE (Int. Cl. ³) |
| A | US-A-2 243 434 (E.W. MENKE) * Ansprüche * | 1 | G 02 B 5 B 29 D 11 |
| A | FR-A- 771 661 (A. GARBARINI) * Zusammenfassung; Figuren * | 1 | |
| A,D | DE-A-1 622 012 (NIRONA) * Ansprüche; Figuren * | 1 | |
| | --- -/- | | |

Der vorliegende Recherchenbericht wurde für alle Patentansprüche erstellt.

| Recherchenort DEN HAAG | Abschlußdatum der Recherche 29-08-1984 | Prüfer PFAHLER R. |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|-----------|---|---|---|
| A,D | US-A-2 330 097  (E.D. WATERS) <br> * Ansprüche; Figuren * <br><br> ----- | 1 | |

RECHERCHIERTE SACHGEBIETE (Int. Cl. ³)

Der vorliegende Recherchenbericht wurde für alle Patentansprüche erstellt.

| Recherchenort <br> DEN HAAG | Abschlußdatum der Recherche <br> 29-08-1984 | Prüfer <br> PFAHLER R. |
|---|---|---|